# EUROPEAN PATENT APPLICATION

(11) **EP 1 544 753 A1**
(43) Date of publication of application: **22.06.2005**
(21) Application number: 04028243.6
(22) Date of filing: 29.11.2004
(51) Int. Cl.: G06F 17/30

(54) **Partitioned database system**

(30) Priority: 15.12.2003 US 734188
(71) Applicant: SAP Aktiengesellschaft, 69190 Walldorf (DE)
(72) Inventor: von Glan, Rudolf, 69207 Sandhausen (DE)
(74) Representative: Hössle Kudlek & Partner

(57) **Abstract**

A system and method for dividing a received database query into a number of parallel subqueries and then submitting the parallel subqueries to a database management system in place of the received query. During database configuration, an embodiment of the invention ensures that a database table includes a partitioning field populated with random numbers. Each time a record is added to the table, an embodiment fills the partitioning field with a new random number. When a query on the database table is received, an embodiment determines a number of parallel subqueries to submit in place of the received query. Each of the parallel subqueries is constructed based on the initially received query combined with an additional constraint on the partitioning field such that the set of parallel subqueries together span the entire range of the random numbers in the partitioning field, and yet each of the parallel subqueries describes a discrete non-overlapping range of the partitioning field. The constraint on the partitioning field (i.e., the size of each range of random numbers) may be determined by trial queries on the database. Finally, an embodiment submits the parallel subqueries to the database management system in place of the received query.

## Description

### Technical Field

This invention relates generally to database processing. More particularly, the invention relates to methods and systems for improving the efficiency of database operations on parallel or multiprocessor computing systems.

### Background of the Invention

Parallel processing is the use of concurrency in the operation of a computer system to increase throughput, increase fault-tolerance, or to reduce the time needed to solve particular problems. Parallel processing is the only route to the highest levels of computer performance. Physical laws and manufacturing capabilities limit the switching times and integration densities of current semiconductor-based devices, putting a ceiling on the speed at which any single device can operate. For this reason, all modern computers rely to some extent on parallelism. The fastest computers exhibit parallelism at many levels.

In order to take advantage of parallel computing hardware to solve a particular problem or to perform a particular operation more quickly, there must be some way to express the solution or the operation using parallel components. For example, in the case of a multiple-CPU computer that supports concurrent execution of multiple instruction streams, there must be some way to express or to extract the generation and cooperation of parallel processes.

Parallel process generation may be explicit or implicit. Many different constructs are known in the art for explicitly generating parallel computing processes. These include, for example, the fork/join construct of the Unix operating system, and the cobegin/coend style constructs in Algol 69 and Occam programming languages. Using explicit parallel constructs, a programmer may specify in advance the generation and character of each parallel process. On the other hand, when parallel processes are implicitly generated, the underlying process generation mechanisms are generally hidden from the application-level programmer (for example, embedded in the operating system), and they tend to be more dynamic - that is, the mechanisms are more responsive to type of operations being performed or the character of the data being processed.

Parallel processes generated by both explicit and implicit techniques are well-suited to database operations. In recent years, there has been a continuing increase in the amount of data handled by database management systems (DBMSs). Indeed, it is no longer unusual for a DBMS to manage databases ranging in size from hundreds of gigabytes to even terabytes. This massive increase in the size of databases is coupled with a growing need for DBMSs to exhibit more sophisticated functionality such as the support of object-oriented, deductive, and multimedia-based applications. In many cases, these new requirements have rendered existing DBMSs unable to provide the necessary system performance, especially given that many DBMSs already have difficulties meeting the I/O and CPU performance requirements of traditional information systems that service large numbers of concurrent users and/or handle massive amounts of data.

As is known in the art, database systems can exploit two basic types of parallelism in a parallel computing environment: *inter-query* parallelism and *intra-query* parallelism. These two categories of database parallelism loosely correspond to the explicit and implicit methods of generating parallel processes mentioned earlier.

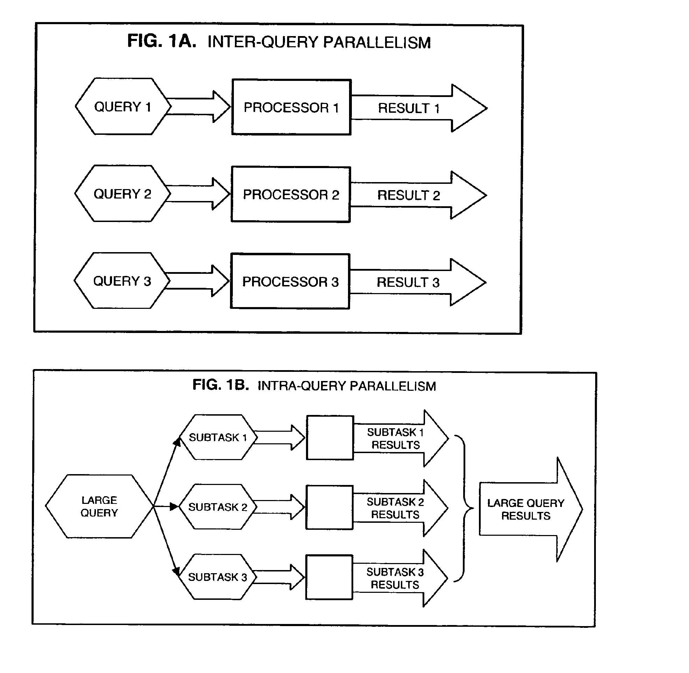

Inter-query parallelism is the ability to use multiple processors to execute several independent queries simultaneously. FIG. 1A illustrates inter-query parallelism, showing how three independent queries can be performed simultaneously by three separate processors. Inter-query parallelism does not speed up the processing of any single query, because each query is still executed by only one processor. However, as the number of simultaneous queries increases (such as may be seen in an online transaction processing system), inter-query parallelism enables queries to be distributed across multiple processors simultaneously, thus substantially reducing the amount of time required to process all of the queries.

Intra-query parallelism is the ability to break a single query into subtasks and to execute those subtasks in parallel using a different processor for each subtask. The result is a decrease in the overall elapsed time needed to execute a single query. Intra-query parallelism is very beneficial in decision support system (DSS) applications, for example, which often have long-running queries. As DSS systems have become more widely used, database management systems have included increasing support for intra-query parallelism. FIG. 1B illustrates intra-query parallelism, showing how one large query may be decomposed into three subtasks, which may then be executed simultaneously using three different processors, or alternatively may be executed by fewer than three processors according to a subtask scheduling algorithm. When completed, the results of the subtasks are then merged to generate a result for the original query. Intra-query parallelism is useful not only with queries, but also with other tasks, such as data loading and index creation.

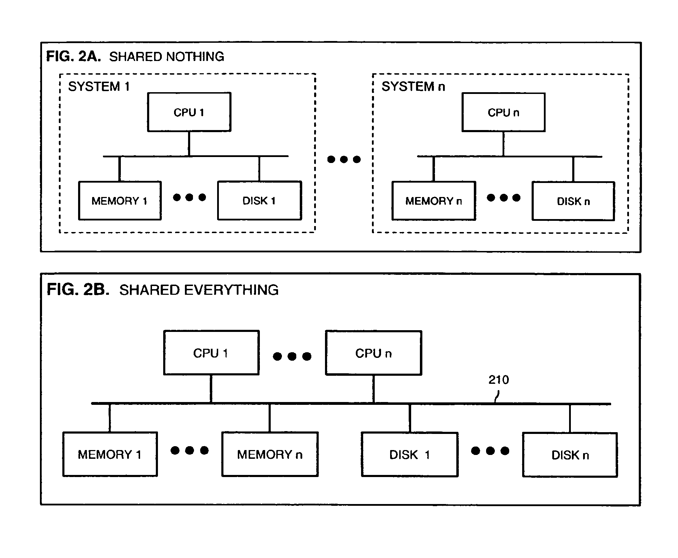

Existing parallel database systems generally follow a "shared nothing" or "shared everything" architecture. FIG. 2A illustrates a shared nothing hardware architecture. In FIG. 2A, the resources provided by System 1 are used exclusively by System 1. Similarly, System n uses only those resources included in System n. A shared nothing environment is one that uses one or more autonomous computer systems to process their own data, and then optionally transmit a result to another system. A DBMS implemented in a shared nothing architecture has an automatic system-level partitioning scheme. For example, if a database table is partitioned across two or more of the autonomous computer systems, then any query of the entire table must employ multiple processes. Each computer system must be invoked separately to operate on its own partition of the database table.

Another hardware architecture, called "shared everything," provides the ability for any resource (e.g., central processing unit, memory, or disk storage) to be available to any other resource. FIG. 2B illustrates a shared everything hardware architecture. All of the resources are interconnected, and any one of the central processing units (i.e., CPU 1 or CPU n) may use any memory resource (Memory 1 to Memory n) or any disk storage (Disk Storage 1 to Disk Storage n). However a shared everything hardware architecture does not scale well. As the number of processors increases, the performance of the shared everything architecture is limited by the shared bus (item 210 in FIG. 2B). This bus has limited bandwidth and the current state of the art of shared everything systems does not provide for a means of increasing the bandwidth of the shared bus as more processors and memory are added. Thus, only a limited number of processors and resources can be supported effectively in a shared everything architecture.

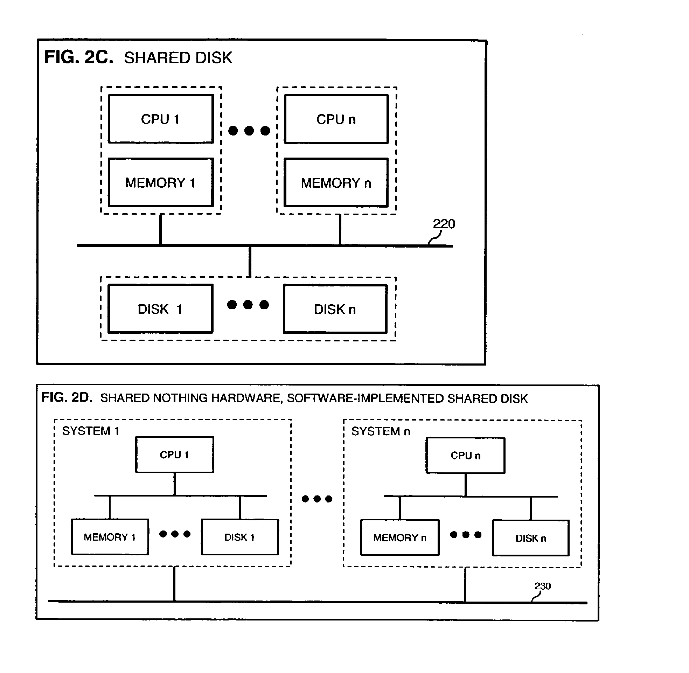

Other hardware architectures are also known. These "hybrid" architectures generally incorporate selected features of both the shared nothing architecture and the shared everything architecture, to achieve a balance between the advantages and disadvantages of each. For example, FIG. 2C illustrates a shared disk architecture, which is similar to the shared everything architecture, except the central processing units are bundled together with their corresponding memory resources. Although each CPU/Memory bundle may still access any disk on the shared bus 220, this architecture enables the number of CPU/Memory units to be scaled higher than the limitations generally imposed on the shared everything architecture.

As a final example, FIG. 2D illustrates a shared nothing architecture in which the resources on System 1, for example, are able to access and share the resources managed by System n, through a software protocol operating over bus or network 230.

Regardless of which hardware architecture is selected, the benefits of database parallelism do not come without a performance price. Parallel execution entails a cost in terms of the processing overhead necessary to break up a task into processing threads, to schedule and manage the execution of those threads, and to combine the results when the execution is complete. Database parallelism overhead can be divided into three areas, startup costs, interference, and skew.

*Startup cost* refers to the time it takes to start parallel execution of a query or a data manipulation statement. It takes time and resources to divide one large task into smaller subtasks that can be run in parallel. Time also is required to create the process threads needed to execute those subtasks, to assign each subtask to its corresponding process thread, and to schedule execution of each process thread on an available processing unit. For a large query, this startup time may not be significant in terms of the overall time required to execute the query. For a small query, however, the startup time may be end up being a significant portion of the overall processing time.

*Interference* refers to the slowdown that one processor may impose on other processors when simultaneously accessing shared resources. While the slowdown resulting from one processor is small, the impact can be substantial when large numbers of processors are involved.

*Skew* refers to the variance in execution time between separate parallel subtasks. It typically arises when the distribution of data in a database system follows a different pattern than expected. As an example, most technology companies employ more engineers than accountants. As a result, the employee distribution is naturally skewed toward engineering. However, if a database designer assumes that all departments will have the same number of employees, then query performance against this database may be poor because the subtask associated with the engineering department will require much more processing time than the subtask corresponding to the accounting department. The net effect, when skew occurs, is that the processing time of an overall query will become equivalent to the processing time of the longest subtask.

To achieve intra-query parallelism, a query must be divided into subtasks. One technique known in the art is to partition a database table into fragments and then to distribute those table fragments across multiple disks. When a query is received, this method divides the query into subtasks corresponding to the table fragments. The subtask operations on separate table fragments provide good performance improvements because a parallel computing system can read from the multiple disks in parallel. This reduces total I/O time as well as total processing time, because each process thread can execute on a separate processor while being simultaneously restricted to data residing on separate disk drives.

Skew can become a significant problem when data is partitioned across multiple disks. In part because of potential skew problems, other data partitioning techniques have been developed to achieve intra-query parallelism. For example, data may be partitioned across multiple disks in round-robin fashion, with new records being assigned to each disk in turn. As another example, data may be partitioned based on a hash value computed from a source key. Hash-based partitioning techniques can provide random distribution, except that identical hash values will be clustered on the same disk.

Still another partitioning technique allows data to be partitioned based on value ranges, so that employees who make between zero and twenty thousand dollars per year are assigned to one disk, for example, with other salary ranges assigned to other disks.

Known techniques to achieve intra-query parallelism are limited by at least two constraints. First, depending on the nature of the data, no straightforward method may exist to guarantee similar-sized partitions based on value ranges of the data. This may be true, for example, when the data comprises document images or audio recordings, or when no field in a database table is sufficiently evenly distributed. Other examples include geographic information and unstructured text.

Second, intra-query techniques may rely on the data having been divided into a fixed number of partitions, usually matching an anticipated number of available processors or disks. These fixed-resource allocation techniques may produce sub-optimal performance results if the number of resources subsequently changes or if one resource becomes overly burdened, either because skew effects force one resource to process more data than other resources, or because one resource is simultaneously burdened by other unrelated tasks. Furthermore, fixed-resource allocation techniques may require significant advance preparation, because the data must be fully partitioned before any query is received. Thus, even if intra-query parallelism improves query performance, the improvement may come at a significant overhead cost. Additionally, even when intra-query techniques attempt to allocate parallel partitions dynamically based on characteristics of a received query, the total number of data records to be returned by the query may be required in advance, before the number of parallel partitions may be finalized. Determining the total number of data records to be returned by a database query may require significant amounts of time. Thus, the overhead cost of dynamic partitioning techniques may be quite significant.

Accordingly, there is a need in the art for a system and method to partition a received database query into a number of parallel subqueries where each individual subquery will not overburden any computing resource, and where each subquery will operate on a similar-sized partition of the database, even when the underlying data is not readily partitioned based on value ranges, without the high overhead costs associated with partitioning the database.

### Summary of the Invention

Embodiments of the present invention are directed to a system and method for dividing a received database query into a number of parallel subqueries and then submitting the parallel subqueries to a database management system in place of the received query. During database configuration, an embodiment of the invention ensures that a database table includes a partitioning field populated with random numbers. Each time a record is added to the table, an embodiment fills the partitioning field with a new random number. When a query on the database table is received, an embodiment determines a number of parallel subqueries to submit in place of the received query. Each of the parallel subqueries is constructed based on the initially received query combined with an additional constraint on the partitioning field such that the set of parallel subqueries together span the entire range of the random numbers in the partitioning field, and yet each of the parallel subqueries describes a discrete non-overlapping range of the partitioning field. The constraint on the partitioning field (i.e., the size of each range of random numbers) may be determined by trial queries on the database. Finally, an embodiment submits the parallel subqueries to the database management system in place of the received query.

### Brief description of the Drawings

FIGS. 1A-1B illustrate inter-query parallelism and intra-query parallelism.

FIGS. 2A-2D illustrate shared nothing, shared everything, and shared disk hardware architectures.

FIG. 3 is a process diagram illustrating the parallelization of a database query by a database query partitioner, according to an embodiment of the present invention.

FIG. 4 is a flow chart illustrating a method for determining a number of parallel subqueries - *i.e.*, a number of parallel "packages" - for a received database query, according to an embodiment of the present invention.

FIG. 5 is a flow chart illustrating a method for calculating a range of partitioning field values for a database subquery, according to an embodiment of the present invention.

### Detailed Description

Embodiments of the present invention will be described with reference to the accompanying drawings, wherein like parts are designated by like reference numerals throughout, and wherein the leftmost digit of each reference number refers to the drawing number of the figure in which the referenced part first appears.

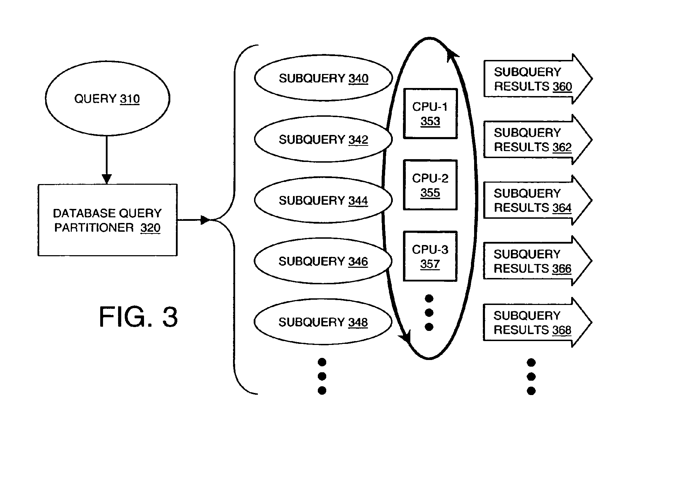

FIG. 3 is a process diagram illustrating parallelization of a database query by a database query partitioner, according to an embodiment of the present invention. As shown in FIG. 3, database query partitioner 320 may accept a database query 310 from other resources in a computing system (not shown). As is known, a database query may be issued from many different sources. Examples of query issuing sources include application software programs executing on a local computer, application software programs executing on a remote computer connected to the local computer via a network or interface bus, operating system software executing on a local or remote computer, and software modules within a local or remote database management system.

When database query partitioner 320 receives database query 310, it may determine whether one of the database tables referenced by query 310 is configured for dynamic parallelization. This determination may be made by examining attributes of a referenced database table to ascertain whether a field in the table contains random numbers that are substantially evenly distributed. Alternatively, this determination may flow from information supplied by database query 310. The random number field may be referred to as a "partitioning field" because it enables database query partitioner 320 to divide the received database query 310 into partitions capable of separate parallel execution. If such a partitioning field exists in a table referenced within query 310, database query partitioner 320 may then use the identified partitioning field to divide received query 310 into a number of parallel subqueries 340-348. Each resulting subquery 340-348 may be based on the original received query 310. However, each resulting subquery 340-348 may also include a new database constraint that restricts each subquery to a specific, non-overlapping range of random numbers in the identified partitioning field. When database query partitioner 320 completes the task of dividing query 310 into component parallel subqueries 340-348, database query partitioner 320 may then schedule parallel subqueries 340-348 to be executed by the appropriate modules of a database management system (not shown) or operating system (not shown).

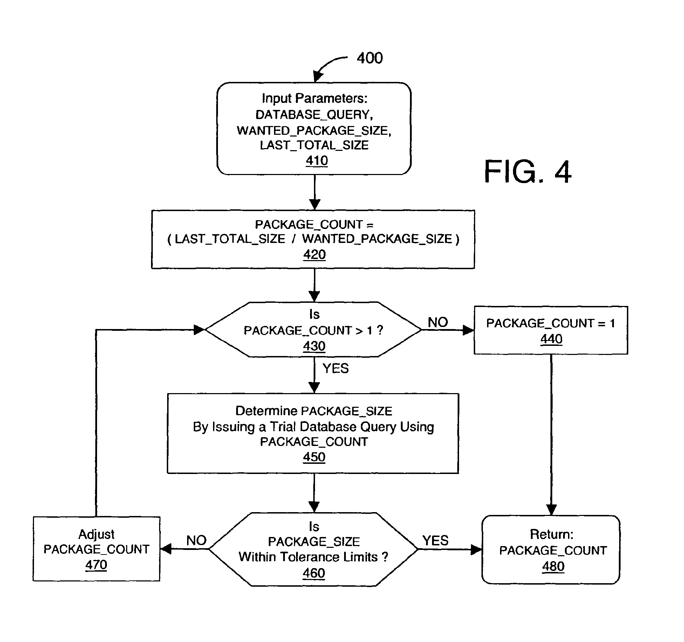

Database query partitioner 320 may attempt to determine an effective number of subqueries 340-348 based on a variety of information, including the performance characteristics of the database management system, the number of parallel CPUs 353-357 available to execute database queries, the number and characteristics of disk storage resources, the size and structure of the underlying database, and information supplied by database query 310. A method by which the actual number of subqueries 340-348 is determined will be discussed with reference to FIG. 4 below.

It is anticipated that parallel CPU scheduling methods known in the art will be employed to execute the scheduled parallel subqueries 340-348 using available CPUs 353-357. One such scheduling method may include a round-robin technique in which each scheduled subquery 340-348 is placed in an execution queue, and when a CPU becomes available (according to multiprocessing CPU allocation schemes known in the art), the available CPU may remove a subquery from the queue and begin (or continue) executing it. As subqueries are completed, others may be taken up and executed, until all of the scheduled subqueries 340-348 have been executed. At that point, all of the subquery results 360-368 are returned to the original source that invoked query 310 so that further processing (database or otherwise) may be performed in parallel on the results without the need to partition a second query.

As is shown in FIG. 3, subquery results 360 corresponds to the results obtained by executing subquery 340. Similarly, subquery results 362 corresponds to subquery 342, and so on. One of the drawbacks in the prior art is the required merging of parallel processing results into one unified result before proceeding forward. This merging step (illustrated in FIG. 1B to produce the "large query results") may often require extensive buffering, and may include an additional write to the hard disk(s), as well as an additional read from the hard disk(s), in order to begin the next processing step. Embodiments of the present invention overcome this drawback in the prior art by maintaining the parallel processing results in their partitioned state, thus permitting subsequent processing steps to continue benefiting from the original partitioning operation performed by database query partitioner 320.

Before a database operation may benefit from dynamic parallelization, at least one of the database tables referenced by the operation is provided with "partitioning" field that is populated with a substantially uniform distribution of random numbers. To prepare a database for dynamic early parallelization, a partitioning field may be added to a selected database table by extending each record in the table to include the partitioning field, and then populating the partitioning field of each record with a random number produced by a random number generator having a substantially uniform distribution. On the other hand, a database may be prepared for dynamic parallelization well in advance by designing the partitioning field into the database schema from the start. When an appropriate schema is already in place, the overhead associated with filling a partitioning field with a random number whenever a new record is added to the database is very small. The only additional step is the generation of a single random number.

As outlined with respect to FIG. 3, database query partitioner 320 may partition a received database query 310 into an effective number of subqueries 340-348 to be executed substantially in parallel. The exact number of subqueries selected by database query partitioner 320 will directly affect the overall improvement in speed that may be achieved by parallelizing the received query 310. For example, if the number of subqueries is one, then no parallelization occurs and no improvement may be expected. On the other hand, if the number of subqueries is equal to the number of records in the database, then the operating system overhead associated with executing each parallel subquery probably will outweigh any speed improvement associated with parallelization.

FIG. 4 is a flow chart illustrating a method 400 for determining a number of parallel subqueries - i.e., a number of parallel "packages" - for a received database query, according to an embodiment of the present invention. The method 400 receives three input parameters: DATABASE_QUERY, WANTED_PACKAGE_SIZE and (optionally) LAST_TOTAL_SIZE (410). Parameter DATABASE_QUERY identifies the particular database query to be performed. Parameter WANTED_PACKAGE_SIZE corresponds to a preferred number of database records to be processed by each parallel package. A preferred number of database records may be determined by experimentation. In the inventor's experience with business record databases, a preferred package size of between 100 and 1000 records has been observed to be optimal. Parameter LAST_TOTAL_SIZE is optional. It indicates the total number of records found to exist in a previous similar query. If LAST_TOTAL_SIZE is not supplied, method 400 sets LAST_TOTAL_SIZE to be the maximum number of records expected to be retrieved with queries like DATABASE-QUERY.

Still referring to FIG. 4, after receiving input parameters, method 400 then initializes PACKAGE_COUNT to be LAST_TOTAL_SIZE divided by WANTED_PACKAGE_SIZE (420). For example, if LAST_TOTAL_SIZE was 1,000 and WANTED_PACKAGE_SIZE was 100, then PACKAGE_COUNT would be set to a value of 10.

Method 400 then begins an iterative process by which the value of PACKAGE_COUNT is refined until an experimentally determined PACKAGE_SIZE falls within predetermined tolerance levels. If PACKAGE_COUNT is not greater than one (430), then PACKAGE_COUNT is set to one (440) and method 400 terminates. However, if PACKAGE_COUNT is greater than one (430), then method 400 issues a trial database query to determine the number of database records that would be processed by each parallel package if there were PACKAGE_COUNT packages (450). This trial database query does not actually need to retrieve data from the database. Instead, the trial query may only determine the number of records which would be read. Once PACKAGE_SIZE, which is the number of records that are to be processed by each parallel package, is tentatively determined (450), PACKAGE_SIZE is then analyzed to determine whether it falls within predetermined tolerance limits (460). Several tolerance tests may be performed on PACKAGE_SIZE. For example, if PACKAGE_SIZE is less than a predetermined minimum number of records, then PACKAGE_COUNT may be adjusted downward by an iteration factor (470), in order to increase PACKAGE_SIZE (PACKAGE_COUNT and PACKAGE_SIZE exhibit an inverse relationship - as the number of packages goes up, the size of each package goes down). As another example, if PACKAGE_SIZE is outside a predetermined tolerance factor of WANTED_PACKAGE_SIZE, then PACKAGE_COUNT may be adjusted by the ratio PACKAGE_SIZE /WANTED_PACKAGE_SIZE (470).

As long as PACKAGE_SIZE remains outside predetermined tolerance levels, method 400 continues to iterate and adjust the value of PACKAGE_COUNT. On the other hand, once PACKAGE_SIZE is determined to fall within predetermined tolerance levels, method 400 will terminate and return the value of PACKAGE_COUNT (480), which indicates the number of parallel packages to be executed for a received database query.

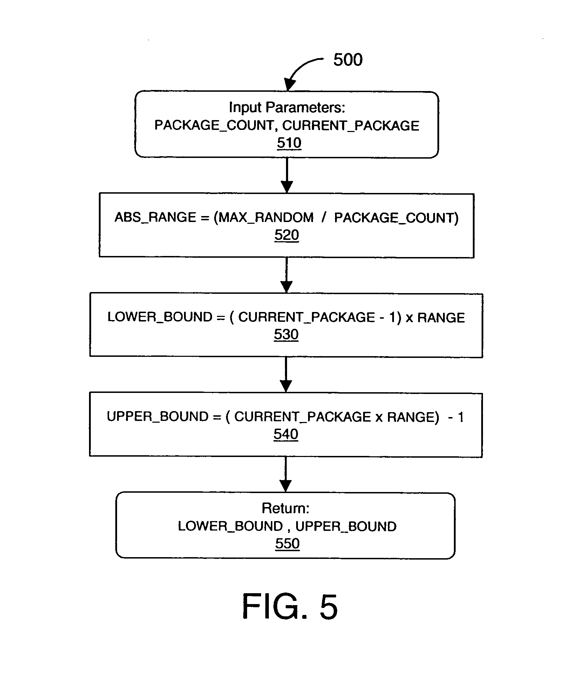

Once the number of parallel packages has been determined for a given database query, each individual parallel subquery must be supplied with a range of partitioning field values, to enable each parallel subquery to operate on a discrete, non-overlapping section of the corresponding database table. Thus, FIG. 5 is a flow chart illustrating a method 500 for calculating a range of partitioning field values for a database subquery, according to an embodiment of the present invention. Method 500 receives two input parameters: PACKAGE_COUNT and CURRENT_PACKAGE (510). Parameter PACKAGE_COUNT specifies the total number of parallel packages to be issued. Parameter CURRENT_PACKAGE identifies the current parallel package under preparation, beginning with 1. After receiving input parameters, method 500 sets ABS_RANGE, which is the absolute range of random numbers to be used for the current parallel package, to the value (MAX_RANDOM / PACKAGE_COUNT) (520). The variable MAX_RANDOM is the maximum random number that was used to populate the partitioning field of the subject database table.

Once ABS_RANGE has been determined, then method 500 may set the upper-bound and lower-bound random numbers that will limit the parallel subquery corresponding to CURRENT_PACKAGE. The lower-bound random number, LOWER_BOUND, is set to the value ((CURRENT_PACKAGE - 1) x ABS_RANGE) (530). Similarly, for most values of CURRENT_PACKAGE, the upper-bound random number, UPPER_BOUND, may be set to the value ((CURRENT_PACKAGE x ABS_RANGE) - 1) (540). However, when CURRENT_PACKAGE is equal to PACKAGE_COUNT, UPPER-BOUND may be set to ABS_RANGE, in order to overcome rounding errors. When the upper-bound and lower-bound random numbers have been calculated, method 500 may terminate, returning the values LOWER_BOUND and UPPER-BOUND (550).

Embodiments of the invention achieve advantages over the prior art because they enable database operations to be partitioned into parallel subtasks using dynamic techniques that are independent of the type of data stored in the database, and because they are more cost-effective than other partitioning schemes, which may exhibit large overhead start-up costs, especially in the setup stages before parallel processing may occur. Furthermore, embodiments of the invention exhibit improvements in parallel processing of partitioned database operations because the smaller and more numerous processing packages enable multiple processor computers to balance and load-level the parallel processes across available CPUs.

Embodiments of the invention may operate well with multi-table database operations. Only one table in a given database operation need possess a partitioning field to enable dynamic partitioning to take place.

Several embodiments of the present invention are specifically illustrated and described herein. However, it will be appreciated that modifications and variations of the present invention are covered by the above teachings and within the purview of the appended claims without departing from the spirit and intended scope of the invention.

## Claims

1. A method of parallelizing a database query, comprising:
dividing a received query on a database table into a number of parallel subqueries, each parallel subquery including a discrete non-overlapping range constraint on a partitioning field of the database table; and
submitting the parallel subqueries to a database management system in place of the received query.

2. The method of claim 1, wherein the discrete non-overlapping range constraints collectively span the entire range of values in the partitioning field.

3. The method of claim 1 or 2, wherein said partitioning field is populated by random numbers.

4. The method of claim 3, wherein said random numbers are distributed substantially uniformly.

5. The method of claim 4, wherein the range constraint comprises a range of values of the random numbers in the partitioning field.

6. The method of claim 5, wherein the range constraint for each individual parallel subquery is based on the number of parallel subqueries and an index number of the individual parallel subquery.

7. The method of one of claims 1 to 6, wherein the database query comprises an SQL statement.

8. The method of one of claims 1 to 7, further comprising:
extending each record of the database table to include the partitioning field; and
populating the partitioning field of each record with a random number produced by a random number generator having a substantially uniform distribution.

9. The method of one of claims 1 to 8, further comprising:
receiving individual results of each parallel subquery; and
separately supplying each of the individual results to subsequent parallel operations.

10. The method of one of claims 1 to 9, wherein the number of parallel subqueries is determined by a method comprising:
setting the number of parallel subqueries based on the received query and a preferred number of database records to be processed by each parallel subquery;
issuing a trial database query having a trial range constraint based on the set number of parallel subqueries, said trial database query returning a trial count of matching database records; and
adjusting the number of parallel subqueries until the trial count falls within a predetermined tolerance factor.

11. A method of parallelizing a computer processing operation, comprising:
dividing the operation into a number of packages;
separating each package into a query stage and a processing stage, each query stage including a discrete non-overlapping range constraint on a partitioning field of a database;
submitting all of the query stages to a database management system substantially in parallel; and
providing the results of each query stage to its corresponding processing stage.

12. The method of claim 11, wherein the number of packages is determined by a method comprising:
setting the number of packages based on a preferred number of database records to be processed by each query stage;
issuing a trial database query having a trial range constraint based on the preferred number of database records, said trial database query returning a trial count of matching database records; and
adjusting the number of packages until the trial count falls within a predetermined tolerance factor.

13. A computer programmed to parallelize a database query, comprising:
means to divide a received query on a database table into a number of parallel subqueries, each parallel subquery including a discrete non-overlapping range constraint on a partitioning field of the database table; and
means to submit the parallel subqueries to a database management system in place of the received query.

14. The computer of claim 13, further comprising:
means to extend each record of the database table to include the partitioning field; and
means to populate the partitioning field of each record with a random number produced by a random number generator having a substantially uniform distribution.

15. The computer of claim 13 or 14, further comprising:
means to set the number of parallel subqueries based on the received query and a preferred number of database records to be processed by each parallel subquery;
means to issue a trial database query having a trial range constraint based on the set number of parallel subqueries, said trial database query returning a trial count of matching database records; and
means to adjust the number of parallel subqueries until the trial count falls within a predetermined tolerance factor.

16. The computer of one of claims 13 to 15, further comprising:
means to receive individual results of each parallel subquery; and
means to supply each of the individual results to subsequent parallel operations.

17. A machine-readable medium having stored thereon a plurality of instructions for parallelizing a database query, the plurality of instructions comprising instructions to perform a method according to any one of the claims 1 to 12.

18. A computer program comprising computer readable instructions for parallelizing a database query, the plurality of instructions comprising instructions to perform a method according to any one of the claims 1 to 12.

19. A computer system, including:
a processor coupled to a network;
an electronic file storage device coupled to the processor; and
a memory coupled to the processor, the memory containing a plurality of executable instructions to implement a method according to any one of claims 1 to 12.
